# EUROPEAN PATENT SPECIFICATION

(11) **EP 4 551 360 B1**
(45) Date of publication and mention of the grant of the patent: **27.05.2026**
(21) Application number: 23736393.2
(22) Date of filing: 04.07.2023
(51) Int. Cl.: B25J 9/10, B25J 9/12, B25J 17/00, B25J 19/00, H02K 7/102

(54) **BRAKE ARRANGEMENT FOR A ROBOT**
BREMSANORDNUNG FÜR EINEN ROBOTER
AGENCEMENT DE FREIN POUR UN ROBOT

(30) Priority: 05.07.2022 EP 22183088
(43) Date of publication of application: 14.05.2025
(73) Proprietor: Kassow Robots ApS, 2770 Kastrup (DK)
(72) Inventor: KASSOW, Kristian, 2300 Copenhagen S (DK)
(74) Representative: COPA Copenhagen Patents
(86) International application number: PCT/EP2023/068382
(87) International publication number: WO 2024/008711

(56) References cited:
- EP-A1- 3 495 094
- EP-A2- 3 208 052
- CN-A- 105 945 991
- CN-A- 107 813 336
- JP-A- 2014 020 515
- US-A1- 2020 070 337
- US-B1- 11 022 191

## Description

The present disclosure relates to a robot, more particular to a robotic arm and/or a joint assembly for such robot or robotic arm.

### BACKGROUND

Robots and in particular robotic arms are widely used to perform a wide variety of automated tasks. Recently lightweight robots have increased in popularity for assisting human activities, e.g. in production facilities. These robots are commonly known as collaborative robots or cobots.

For robots, such as robotic arms, it is important to be able to stop movement of joints, e.g. in case of a power failure or other interruption, which may compromise safety. Thus, possibility to stop or prevent movement of joints of the robot is of great importance, especially when automated and/or autonomous robots are used for assisting human activities and working alongside humans.

Furthermore, there is a desire towards making robotic arms and joints thereof as compact as possible. Documents EP3208052A2, EP3495094A1, US11022191B1, CN107813336A disclose some robotic joint braking devices.

### SUMMARY

It is an object of the present disclosure to at least provide improvements of the prior art and/or to solve or reduce problems known from the prior art. further object of the present disclosure to provide an advantageous or at least alternative robotic joint assembly and a robotic joint with a robotic joint assembly.

Thus, the present disclosure relates to a joint assembly for a robot and a robot comprising at least one such joint assembly. Further, the present disclosure relates to a brake arrangement for such joint assembly.

Accordingly, a joint assembly for a robot is disclosed. The joint assembly comprises an axle extending along a rotation axis and being rotatable around the rotation axis. The axle is rotated by an electric motor. The axle has a first axle diameter at a first axial position along the rotation axis.

The joint assembly further comprises a brake casing. The axle is rotatable around the rotation axis relative to the brake casing. The joint assembly further comprises a brake ring being coaxial with the axle and positioned at the first axial position. The brake ring has an interaction location at which a tangential force may be exerted on the brake ring to alter an internal diameter of the brake ring. In some examples, the brake ring may have a plurality of such interaction locations. The brake ring is coupled with the brake casing to prevent rotation of the brake ring relative to the brake casing. The internal diameter of the brake ring in a braking mode is equal to or less than the first axle diameter. The internal diameter of the brake ring in a non-braking mode is more than the first axle diameter.

The joint assembly further comprises an engagement component configured to move along, such as substantially along, the rotation axis, between a first position and a second position. The engagement component is further configured to engage with the brake ring at the interaction location. In the first position the engagement component exerts a first tangential force on the brake ring. In the second position the engagement component exerts no or a second tangential force on the brake ring. The second tangential force is smaller than the first tangential force. In examples where the brake ring has a plurality of interaction locations, the joint assembly may comprise a plurality of respective engagement components, alternatively, the engagement component (i.e. one engagement component) may be configured to engage with the brake ring at each of the plurality of interaction locations.

The brake casing, the brake ring and the engagement component may form a brake arrangement and/or part of a brake arrangement. Accordingly, the joint assembly may comprise the brake arrangement. The brake arrangement may be provided as an independent module for being coupled with other components of the joint assembly, such as the electric motor and the axle. The brake arrangement, the electric motor, the axle, and optionally other components, as described in the following, may form a motor assembly.

Also, a robot is disclosed. The robot comprises one or more joint assemblies, such as a first joint assembly, according to the disclosed joint assembly. In some examples, the robot may comprise a plurality of joint assemblies including the first joint assembly and a second joint assembly. Each of the plurality of joint assemblies may be in accordance with the joint assembly disclosed.

By the present disclosure an advantageous braking arrangement is provided, wherein altering the internal diameter of the brake ring results in braking a rotation of the axle relative to the brake casing.

It is an advantage of the present disclosure, that a brake arrangement is provided, which may be less prone to drag while not braking. Furthermore, the brake arrangement of the present disclosure has the advantage that a high braking force may be achieved. Furthermore, the present disclosure, especially related to the movement of the engagement component being along the rotation axis, is advantageous in that it has been found to facilitate a more compact joint assembly, since mechanisms for moving the engagement component may be arranged along the rotation axis as opposed to, e.g. on the side, which would increase the diameter of joint assembly.

In some examples, the engagement component by interaction with the interaction location prevents rotation of the brake ring relative to the brake casing. Hence, the brake ring may be coupled with the brake casing to prevent rotation of the brake ring relative to the brake casing via the engagement component at the interaction location and/or at the plurality of interaction locations.

The brake arrangement may be arranged so as to apply an increasing tangential force, either during braking or during release of the brake. Thus, the first tangential force may be exerted on the brake ring at the interaction location in the non-braking mode and no or the second tangential force may be exerted on the brake ring at the interaction location in the braking mode. Alternatively, the first tangential force may be exerted on the brake ring at the interaction location in the braking mode and no or the second tangential force may be exerted on the brake ring at the interaction location in the non-braking mode.

The engagement component may comprise a wedge engagement surface forming an angle relative to the rotation axis. When the engagement component is in the first position the wedge engagement surface may contact a contact surface of the brake ring at the interaction location. The engagement component may comprise a plurality of wedge engagement surfaces, e.g. two wedge engagement surfaces, including a first wedge engagement surface and a second wedge engagement surface. The first wedge engagement surface may form a first angle relative to the rotation axis. The second wedge engagement surface may form a second angle relative to the rotation axis. The first angle and the second angle may be the same, such as substantially the same, or the first angle and the second angle may be different. When the engagement component is in the first position the first wedge engagement surface may contact a first contact surface of the brake ring at the interaction location. When the engagement component is in the first position the second wedge engagement surface may contact a second contact surface of the brake ring at the interaction location.

In some examples, only one of the engagement surfaces may be angled. Thus, the engagement component may comprise only one wedge engagement surface. An opposite engagement surface may be straight, e.g. being parallel, such as substantially parallel, to the rotation axis.

The brake ring may comprise a wedge contact surface forming an angle relative to the rotation axis at the interaction location. When the engagement component is in the first position the wedge contact surface may be in contact with an engagement surface, such as a wedge engagement surface, of the engagement component. The brake ring may comprise a plurality of wedge contact surfaces, e.g. two wedge contact surfaces, including a first wedge contact surface and a second wedge contact surface. The first wedge contact surface may form a first angle relative to the rotation axis. The second wedge contact surface may form a second angle relative to the rotation axis. The first angle and the second angle may be the same, such as substantially the same, or the first angle and the second angle may be different. When the engagement component is in the first position the first wedge contact surface may be in contact with a first engagement surface, such as a first wedge engagement surface, of the engagement component. When the engagement component is in the first position the second wedge contact surface may be in contact with a second engagement surface, such as a second wedge engagement surface, of the engagement component.

In some examples, only one of the contact surfaces of the brake ring may be angled. Thus, the brake ring may comprise only one wedge contact surface. An opposite contact surface may be straight, e.g. being parallel, such as substantially parallel, to the rotation axis.

Both the engagement component and the brake ring may comprise wedge surfaces as explained above. When both the engagement component and the brake ring comprise wedge surfaces, these may be substantially complementary, i.e. being substantially parallel. However, in some examples, only one of the engagement components and the brake ring comprises wedge surfaces.

The brake ring may comprise a rolling element at the interaction location. The rolling element may form a contact surface of the brake ring at the interaction location, such as the contact surface, the first contact surface and/or the second contact surface of the brake ring, as referred to above. The rolling element may be arranged to rotate about a rolling axis perpendicular to the rotation axis. The brake ring may comprise a plurality of rolling elements at the interaction location, e.g. two rolling elements, including a first rolling element and a second rolling element. The first rolling element may form a first contact surface of the brake ring at the interaction location, such as the first contact surface of the brake ring, as referred to above. The first rolling element may be arranged to rotate about a first rolling axis perpendicular to the rotation axis. The second rolling element may form a second contact surface of the brake ring at the interaction location, such as the second contact surface of the brake ring, as referred to above. The second rolling element may be arranged to rotate about a second rolling axis perpendicular to the rotation axis. The second rolling axis may be parallel, such as substantially parallel, to the first rolling axis. The rolling element(s) may be adapted to translate along the rotation axis, e.g. the rolling axis, the first rolling axis and/or the second rolling axis may be translatable along the rotation axis.

The engagement component may comprise an engagement rolling element. The engagement rolling element may form an engagement surface of the engagement component, such as the engagement surface, the first engagement surface and/or the second engagement surface of the engagement component, as referred to above. The engagement rolling element may be arranged to rotate about an engagement rolling axis perpendicular to the rotation axis. The engagement component may comprise a plurality of engagement rolling elements, e.g. two engagement rolling elements, including a first engagement rolling element and a second engagement rolling element. The first engagement rolling element may form a first engagement surface of the engagement component, such as the first engagement surface, as referred to above. The first engagement rolling element may be arranged to rotate about a first engagement rolling axis perpendicular to the rotation axis. The second engagement rolling element may form a second engagement surface of the engagement component, such as the second engagement surface, as referred to above. The second engagement rolling element may be arranged to rotate about a second engagement rolling axis perpendicular to the rotation axis. The second engagement rolling axis may be parallel, such as substantially parallel, to the first engagement rolling axis. The engagement rolling element(s) may be adapted to translate along the rotation axis, e.g. the engagement rolling axis, the first engagement rolling axis and/or the second engagement rolling axis may be translatable along the rotation axis.

Both the engagement component and the brake ring may comprise rolling elements. However, in some examples, only one of the engagement components and the brake ring comprises rolling elements.

In some examples, each or any of the rolling axes, as described above (whether for rolling elements of the brake ring or of the engagement component) may be perpendicular to the tangential direction of the brake ring.

The engagement component may comprise a rod element. The rod element may extend along a rod axis. The rod element may connect the engagement component with a connection point of the brake ring at the interaction location. When the engagement component is in the first position the rod axis and the rotation axis may form a first angle. When the engagement component is in the second position the rod axis and the rotation axis may form a second angle. The second angle may be different from the first angle. For example, the second angle may be larger than the first angle. Alternatively, the first angle may be larger than the second angle.

The engagement component may comprise a plurality of rod elements, e.g. two rod elements, including a first rod element and a second rod element.

The first rod element may extend along a first rod axis. The first rod element may connect the engagement component with a first connection point of the brake ring at the interaction location. When the engagement component is in the first position the first rod axis and the rotation axis may form a first angle. When the engagement component is in the second position the first rod axis and the rotation axis may form a second angle. The second angle may be different from the first angle.

For example, the second angle may be larger than the first angle. Alternatively, the first angle may be larger than the second angle.

The second rod element may extend along a second rod axis. The second rod element may connect the engagement component with a second connection point of the brake ring at the interaction location. When the engagement component is in the first position the second rod axis and the rotation axis may form a first angle. When the engagement component is in the second position the second rod axis and the rotation axis may form a second angle. The second angle may be different from the first angle. For example, the second angle may be larger than the first angle. Alternatively, the first angle may be larger than the second angle.

When the engagement component is in an intermediate position between the first position and the second position, an engagement surface of the engagement component, e.g. the engagement surface, the first engagement surface, and/or the second engagement surface, as referred to above, may contact a contact surface of the brake ring, e.g. the contact surface, the first contact surface, and/or the second contact surface, as referred to above. In the intermediate position, the engagement component may exert an intermediate tangential force on the brake ring. The intermediate tangential force may be smaller than the first tangential force. The intermediate tangential force may be larger than the second tangential force. The tangential force exerted by the engagement component on the brake ring may increase when the engagement component moves from the intermediate position to the first position. Hence, the braking force may be controlled based on the movement of the engagement component. The angle of the wedge surfaces and/or the length of the rod elements, described above, may be varied to specify the relationship between the distance of movement of the engagement component and the resulting braking force applied to the axle.

The engagement component may move a first distance along the rotation axis between the first position and the intermediate position. The engagement component may move a second distance along the rotation axis between the intermediate position and the second position. The first distance may be longer than the second distance.

The joint assembly, such as the brake arrangement of the joint assembly, may comprise an electromagnetic element, such as a solenoid, and a spring element. The electromagnetic element and the spring element may be collectively configured to move the engagement component between the first position and the second position.

The electromagnetic element may, upon activation, be configured to move the engagement component to the first position. The spring element may, upon deactivation of the electromagnetic element, be configured to move the engagement component to the second position. Alternatively, the electromagnetic element may, upon activation, be configured to move the engagement component to the second position. The spring element may, upon deactivation of the electromagnetic element, be configured to move the engagement component to the first position. In some examples, two opposite acting electromagnetic elements may be employed, i.e. dispensing with the spring element. For Example, a first electromagnetic element may, upon activation, be configured to move the engagement component to the first position and a second electromagnetic element may, upon activation, be configured to move the engagement component to the second position. However, it may be advantageous to employ a spring element to move the engagement component to the position corresponding to the braking mode, as the brake will then be automatically activated in case of loss of power.

The joint assembly, such as the motor assembly, may comprise a motor assembly housing. The joint assembly, such as the motor assembly, may comprise an output part. The joint assembly, such as the motor assembly, may comprise a strain wave gearing system. The strain wave gearing system may comprise: a wave generator, a flexspline and a circular spline. The flexspline may be connected to one of the motor assembly housings and the output part and the circular spline may be connected to the other of the motor assembly housing and the output part. For example, the flexspline may be connected to the motor assembly housing and the circular spline may be connected to the output part. Alternatively, the flexspline may be connected to the output part and the circular spline may be connected to the motor assembly housing. The wave generator may be rotated by rotation of the axle.

The motor assembly housing may comprise the brake casing, or the motor assembly housing and brake casing may be fixedly connected. Alternatively, the output part may comprise the brake casing or the output part and brake casing may be fixedly connected.

As mentioned previously, the axle is rotated by an electric motor. The electric motor may comprise a stator and a rotor magnet. The rotor magnet may be affixed to the axle. The stator may be affixed to the motor assembly housing. The rotor magnet may be a permanent magnet and/or an assembly of a plurality of permanent magnets. In other examples, the rotor magnet may be an electro-magnet and/or an assembly of a plurality of electromagnets.

In some examples, the joint assembly may comprise a plurality of motor assemblies, such as two motor assemblies, e.g. to allow the joint assembly to rotate adjoining links relative to a plurality of non-parallel axes. In such situation, the joint assembly may comprise a plurality of motor assemblies, e.g. two motor assemblies, wherein each of the plurality of motor assemblies is in accordance with the motor assembly as disclosed previously.

Hence, the joint assembly may comprise a second axle extending along a second rotation axis and being rotatable around the second rotation axis. The second axle may be rotated by a second electric motor. The second axle may have a second axle diameter at a second axial position along the second rotation axis.

The joint assembly may further comprise a second brake casing. The second axle may be rotatable around the second rotation axis relative to the second brake casing. The joint assembly further may comprise a second brake ring being coaxial with the second axle and positioned at the second axial position. The second brake ring may have a second interaction location at which a tangential force may be exerted on the second brake ring to alter an internal diameter of the second brake ring. In some examples, the second brake ring may have a plurality of such second interaction locations. The second brake ring may be coupled with the second brake casing to prevent rotation of the second brake ring relative to the second brake casing. The internal diameter of the second brake ring in a braking mode may be equal to or less than the second axle diameter. The internal diameter of the second brake ring in a non-braking mode may be more than the second axle diameter.

The joint assembly may further comprise a second engagement component configured to move along, such as substantially along, the second rotation axis, between a first position and a second position. The second engagement component may further be configured to engage with the second brake ring at the second interaction location. In the first position the second engagement component may exert a first tangential force on the second brake ring. In the second position the second engagement component may exert no or a second tangential force on the second brake ring. The second tangential force may be smaller than the first tangential force. In the example where the second brake ring has a plurality of second interaction locations, the joint assembly may comprise a plurality of respective second engagement components, alternatively, the second engagement component (i.e. one second engagement component) may be configured to engage with the second brake ring at each of the plurality of second interaction locations.

The second brake casing, the second brake ring and the second engagement component may form a second brake arrangement and/or part of a second brake arrangement. The second brake arrangement, the second electric motor, the second axle may form a second motor assembly. Other components and features described in relation to the motor assembly above may be applied, mutatis mutandis, to the second motor assembly.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 is a schematic diagram illustrating an exemplary robot,
Fig. 2 is a schematic diagram illustrating an exemplary joint assembly,
Fig. 3 schematically illustrates a cross-sectional view of an exemplary motor assembly,
Fig. 4 schematically illustrates a cross-sectional view of an exemplary motor assembly,
Fig. 5 schematically illustrates a cross sectional view of a brake arrangement,
Fig. 6 schematically illustrates various examples of interactions in a brake arrangement,
Fig. 7 schematically illustrates various examples of interactions in a brake arrangement,
Fig. 8 schematically illustrates various examples of interactions in a brake arrangement,
Fig. 9 schematically illustrates a cross sectional view of a brake arrangement.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

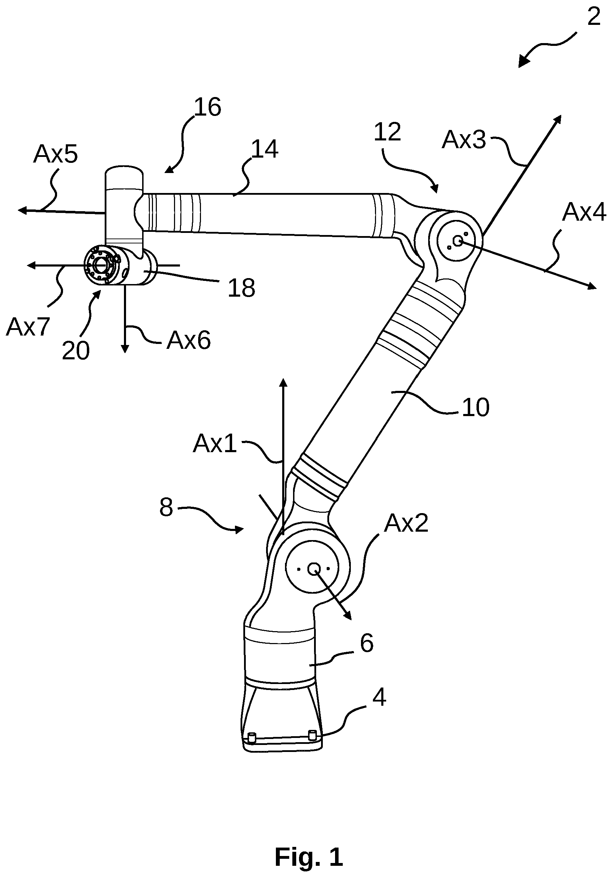

Fig. 1 is a schematic diagram illustrating an exemplary robot 2, which in the present example is a robotic arm, more particularly, a seven-axis robotic arm.

The robot 2 comprises a plurality of joint assemblies, including a first joint assembly 8, a second joint assembly 12, a third joint assembly 16, and a fourth joint assembly 20. In other examples, the robot may comprise fewer or more joint assemblies. For example, the robot 2 may, in another configuration, comprise only one joint assembly, such as the first joint assembly 8.

The robot 2 comprises a plurality of links, including a first link 6, a second link 10, a third link 14, and a fourth link 18. The links extends between the joint assemblies. For example, the first link 6 extends between a base 4 of the robot 2 and the first joint assembly 8. The second link 10 extends between the first joint assembly 8 and the second joint assembly 12. The third link 14 extends between the second joint assembly 12 and the third joint assembly 16. The fourth link 18 extends between the third joint assembly 16 and the fourth joint assembly 20.

Each of the joint assemblies 8, 12, 16, 20 are adapted to rotate one or more respective links relative to the joint assembly around an axis. For example, the first joint assembly 8 is adapted to rotate the first link 6 relative to the first joint assembly 8 around a first axis Ax1. The first joint assembly 8 is adapted to rotate the second link 10 relative to the first joint assembly 8 around a second axis Ax2. The second axis Ax2 is non-parallel with the first axis Ax1. The second joint assembly 12 is adapted to rotate the second link 10 relative to the second joint assembly 12 around a third axis Ax3. The second joint assembly 12 is adapted to rotate the third link 14 relative to the second joint assembly 12 around a fourth axis Ax4. The fourth axis Ax4 is non-parallel with the third axis Ax3. The third joint assembly 16 is adapted to rotate the third link 14 relative to the third joint assembly 16 around a fifth axis Ax5. The third joint assembly 16 is adapted to rotate the fourth link 18 relative to the third joint assembly 16 around a sixth axis Ax6. The sixth axis Ax6 is non-parallel with the fifth axis Ax5. The fourth joint assembly 20 is adapted to rotate the fourth link 18 relative to the fourth joint assembly 20 around a seventh axis Ax7. The robot 2 may be put in some configurations where none of the seven axes Ax1-Ax7 are parallel. However, in some other configurations two or more of the seven axes may be parallel.

Although being described in relation to a robot 2 being operable relative to seven axes, the present disclosure may alternatively be applied to a robot having only six axes, or even fewer axes. For example, with respect to the example illustrated in Fig. 1, movement around the third axis Ax3, may be omitted, to obtain a robot operable relative to six axes. In such situation, the first joint assembly 8 may be adapted to rotate the first link 6 relative to the first joint assembly 8 around the first axis Ax1 and to rotate the second link 10 relative to the first joint assembly 8 around the second axis Ax2. The second joint assembly 12 may be adapted to rotate the third link 14 relative to the second joint assembly 12 around the fourth axis Ax4 and to rotate the third link 14 relative to the second joint assembly 12 around the fifth axis Ax5. The third joint assembly 16 may be adapted to rotate the third link 14 relative to the third joint assembly 16 around the sixth axis Ax6 and to rotate the fourth link 18 relative to the third joint assembly 16 around the seventh axis Ax7. The fourth joint assembly 20 may be omitted. Hence, a robot operable relative to six axes may be realised with only three joint assemblies according to the present disclosure.

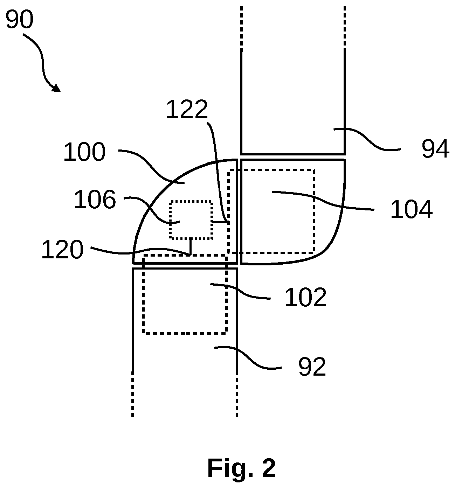

Fig. 2 is a schematic diagram illustrating an exemplary joint assembly 90, which may be any of the first, second, or third joint assemblies 8, 12, 16 as shown in Fig. 1.

The joint assembly 90 comprises a joint housing 100. The joint assembly 90 comprises a first motor assembly 102 connecting the joint housing 100 with a primary link 92 (e.g. the first link 6, the second link 10, or the third link 14 of Fig. 1). The first motor assembly 102 is adapted to rotate the primary link 92 relative to the joint housing 100 around a primary axis (e.g. the first axis Ax1, the third axis Ax3, the fifth axis Ax5, or the seventh axis Ax7 of Fig. 1). The illustrated joint assembly 90 comprises an optional second motor assembly 104 connecting the joint housing 100 with a secondary link 94 (e.g. the second link 10, the third link 14, or the fourth link 18 of Fig. 1). The second motor assembly 104 is adapted to rotate the secondary link 94 relative to the joint housing 100 around a secondary axis (e.g. the second axis Ax2, the fourth axis Ax4, or the sixth axis Ax6 of Fig. 1). The joint assembly 90 comprises circuitry 106, e.g. a first PCB, accommodated in the joint housing 100. The circuitry 106 is adapted to control the first motor assembly 102 and the second motor assembly 104.

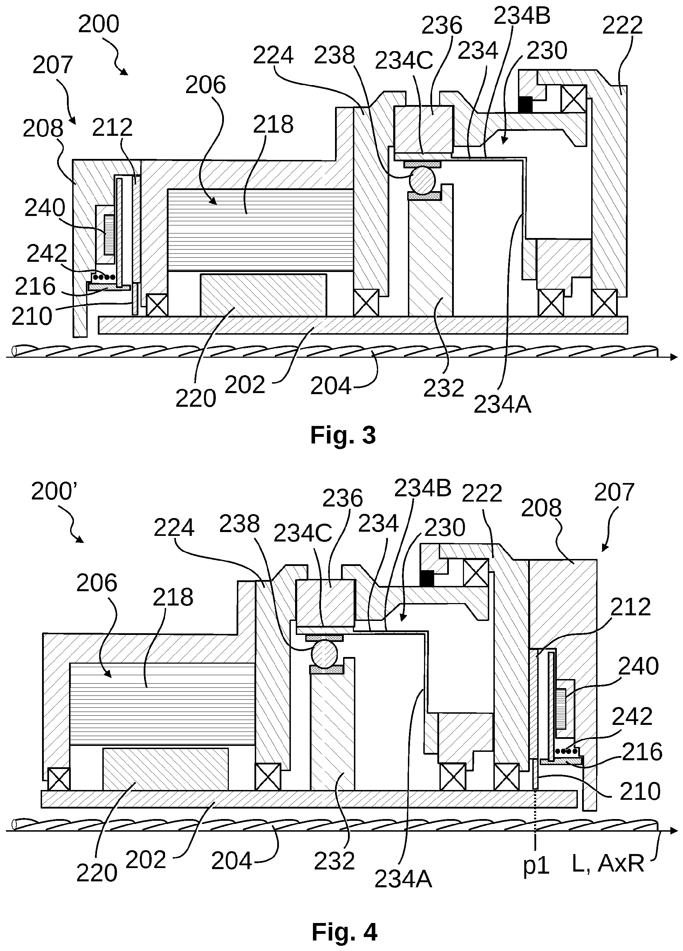

Figs. 3 and 4 schematically illustrates half of cross-sectional views of exemplary motor assemblies 200, 200', which may be a motor assembly of one or more of the joint assemblies 8, 12, 16, 90, as previously discussed. For example, the motor assemblies 200, 200' may be the first motor assembly 102 and/or the second motor assembly 104 of Fig. 2. The cross-sectional view is seen with the longitudinal axis L of the motor assemblies 200, 200' extending left-right in the figures. The motor assemblies 200, 200' are generally symmetrical along the longitudinal axis L, and therefore, only half of the cross sections are shown. The motor assemblies 200, 200' are substantially similar, with the only significant difference that a brake casing is connected to different parts of the motor assemblies. Thus, the following description of an exemplary motor assembly, unless otherwise provided, apply for both of the motor assemblies 200, 200' of Figs 3 and 4, respectively.

The motor assembly 200, 200' comprises an axle 202 extending along a rotation axis AxR. In the present example, the rotation axis AxR is the same as the longitudinal axis L of the motor assembly 200, 200'. The axle 202 is rotatable around the rotation axis AxR. The axle 202 may be hollow to allow wiring 204 extending through the axle from one side of the motor assembly 200, 200', to the other, e.g. such that power and communication cables can be supplied to successive joint assemblies.

The axle 202 is rotated by an electric motor 206. The electric motor 206 comprises a stator 218 and a rotor magnet 220. The rotor magnet 220 is affixed to the axle 202. The stator 218 is affixed to the motor assembly housing. The rotor magnet 220 may be a permanent magnet and/or an assembly of a plurality of permanent magnets. In other examples, the rotor magnet may be an electro-magnet and/or an assembly of a plurality of electromagnets.

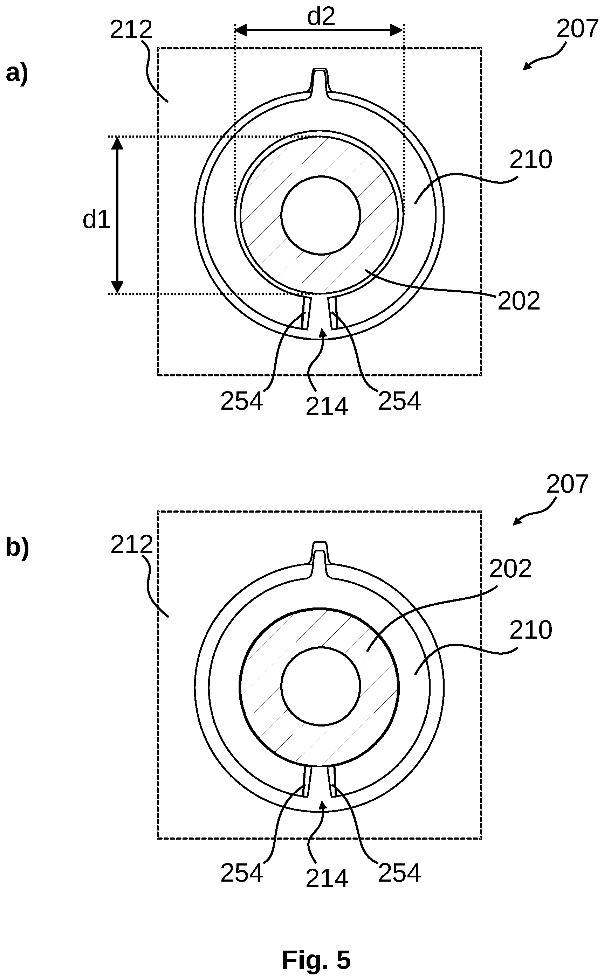

The axle 202 has a first axle diameter d1 (see Fig. 5) at a first axial position p1 along the rotation axis AxR.

The motor assembly 200, 200' comprises a strain wave gearing system 230. The strain wave gearing system 230 comprises a wave generator 232, a flexspline 234, and a circular spline 236. The wave generator 232, the flexspline 234 and the circular spline 236 together form a strain wave gearing system 230. However, various terms may be used to refer to such a gearing system. The flexspline 234 may comprise a base part 234A, a cup wall part 234B and a toothed wall part 234C. The toothed wall part 234C is partly in contact with the circular spline 236. The wave generator 232 is in contact with the flexspline 234, more particularly with the inside of the toothed wall part 234C of the flexspline 234, via the wave generator bearing 238. The wave generator 232 is rotated by rotation of the axle 202. During rotation of the wave generator 232 the toothed wall part 234C of the flexspline 234 is caused to move relative to the circular spline 236.

The motor assembly 200, 200' comprises a motor assembly housing 222. The motor assembly 200, 200' comprises an output part 224. The flexspline 234, i.e. the base part 234A of the flexspline 234, is, in the illustrated example, connected to the motor assembly housing 222 and the circular spline 236 is connected to the output part 224. Thereby relative rotation between the flexspline 234 and the circular spline 236, as caused by rotation of the wave generator, results in relative rotation of the motor assembly housing 222 and the output part 224. The strain wave gearing system 230 may, alternatively, be arranged oppositely, such that the flexspline 234 is connected to the output part 224, and the circular spline 236 connected to the motor assembly housing 222.

The motor assembly 200, 200' a brake arrangement 207. The brake arrangement includes a brake casing 208. In Fig. 3, the brake casing 208 is fixedly connected to the output part 224. In some examples, the brake casing 208 may form part of the output part 224. In Fig. 4 the brake casing 208 is fixedly connected to the motor assembly housing 222. In some examples, the brake casing 208 may form part of the motor assembly housing 222.

The axle 202 is rotatable around the rotation axis AxR relative to the brake casing 208. The motor assembly 200, 200' comprises a brake ring 210. The brake ring 210 is coaxial with the axle 202 and the brake ring 210 is positioned at the first axial position p1. As is described in more detail in relation to Fig. 5, the brake ring 210 is configured such that an internal diameter d2 of the brake ring 210 in a braking mode is equal to or less than the first axle diameter d1 (Fig. 5b). The internal diameter d2 of the brake ring 202 in a non-braking mode is more than the first axle diameter d1 (Fig. 5a). Thereby, by altering the internal diameter d2 of the brake ring 202, rotation of the axle 202 may be braked.

The brake arrangement 207 comprises an engagement component 216. The engagement component 216 is configured to move substantially along the rotation axis AxR, between a first position and a second position. The engagement component 216 is further configured to engage with the brake ring 210 at the interaction location p1. In the first position the engagement component exerts a first tangential force on the brake ring 210. In the second position the engagement component 216 exerts no or a second tangential force on the brake ring 210, wherein the second tangential force is smaller than the first tangential force. Hence, the engagement component 216 exerts a bigger tangential force on the brake ring 210, when in the first position as compared to when being in the second position. Accordingly, Fig. 3 illustrates the engagement component 216 being in the second position, where the engagement component 216 exerts no or only a small tangential force on the brake ring. More specifically, Fig. 3 illustrates the engagement component 216 not being engaged with the brake ring 210.

The brake arrangement 207 may be controlled by an electromagnetic element 240, e.g. a solenoid. For example, as illustrated, the motor assembly 200, 200', such as the brake arrangement 207, may comprise an electromagnetic element 240, such as a solenoid. The motor assembly 200, 200', such as the brake arrangement 207, may further comprise a spring element 242. The electromagnetic element 240 and the spring element 242 are collectively configured to move the engagement component 216 between the first position and the second position. In the illustrated example, the electromagnetic element 240 is configured to, upon activation, to move the engagement component 216 to the second position. Conversely, the spring element 242 is configured to, upon deactivation of the electromagnetic element 240, to move the engagement component 216 to the first position. It should be readily realised, that the electromagnetic element 240 and spring element 242 may be arranged oppositely, such that the electromagnetic element 240 is configured to, upon activation, to move the engagement component 216 to the first position, and the spring element 242 is configured to, upon deactivation of the electromagnetic element 240, to move the engagement component 216 to the second position. The brake casing 208 may be made of a ferromagnetic material, such as iron, and may thereby act as a core of the electromagnetic element 240. In other examples, the electromagnetic element 240 may comprise a designated iron core, in which case the brake casing 208 may be made of a non-ferromagnetic material.

Fig. 5 schematically illustrates a cross sectional view, in two situations (Figs. 5a and 5b, respectively) in the direction of the longitudinal axis L in Figs. 3 and 4, at the first axial position p1. More specifically, Fig. 5 illustrates the axle 202, the brake ring 210, and a coupling element 212, which couples the brake ring 210 to the brake casing 208, to prevent rotation of the brake ring 210 relative to the brake casing 208 (see Figs. 3 and 4). In some examples, the brake ring 210 may be coupled to the brake casing 208 without the illustrated coupling element 212.

The brake ring 210 has an interaction location 214 at which a tangential force may be exerted on the brake ring 210 to alter the internal diameter d2 of the brake ring 210. When the internal diameter d2 of the brake ring 210 is equal to or less than the first axle diameter d1, as seen in Fig. 5b, braking of the rotation of the axle 202 is performed by the friction between the brake ring 210 and the surface of the axle 202. When the internal diameter d2 of the brake ring 210 is more than the first axle diameter d1, as seen in fig. 5a, rotation of the axle 202 is not braked by the brake ring 210.

The brake arrangement 207 may be arranged so that a tangential force is exerted on the brake ring 210 to either release the brake or to engage the brake. For example, the first tangential force may be exerted on the brake ring 210 at the interaction location 214 in a non-braking mode (Fig. 5a) and no or the second tangential force may be exerted on the brake ring 210 at the interaction location 214 in a braking mode (Fig. 5b). Alternatively, the first tangential force may be exerted on the brake ring 210 at the interaction location 214 in the braking mode (Fig. 5b) and no or the second tangential force may be exerted on the brake ring 210 at the interaction location 214 in the non-braking mode. Resilience of the brake ring 210 may cause the opposite mode when the first tangential force is released. For example, the brake ring 210 may have an inner diameter d2, in an equilibrium state, which is smaller than the diameter d1 of the axle 202, thereby a tangential force is needed at the interaction location 214 to increase the diameter d2 of the brake ring 210, and to lessen the braking force. Conversely, the brake ring 210 may have an inner diameter d2, in an equilibrium state which is larger than the diameter d1 of the axle 202, thereby a tangential force is needed at the interaction location 214 to decrease the diameter d2 of the brake ring 210, so as to activate the brake and increase the braking force. In some examples, a resilient element, e.g. a spring, may be provided at the interaction location 214, so as to cause the opposite mode when the first tangential force is released. However, alternatively or additionally, the brake ring 210 may have an inherent resilience.

The brake ring 210 comprises contact surfaces 254 at the interaction location 214, for the engagement component 216 to contact, such as to exert the tangential force to decrease or increase the diameter d2 of the brake ring.

In some examples, the brake ring 210 may be coupled to the brake casing 208 via interaction of an engagement component at the interaction location 214. Hence, rotation of the brake ring 210 relative to the brake casing 208 (see Figs. 3 and 4) may be prevented by interaction of the engagement component at the interaction location 214.

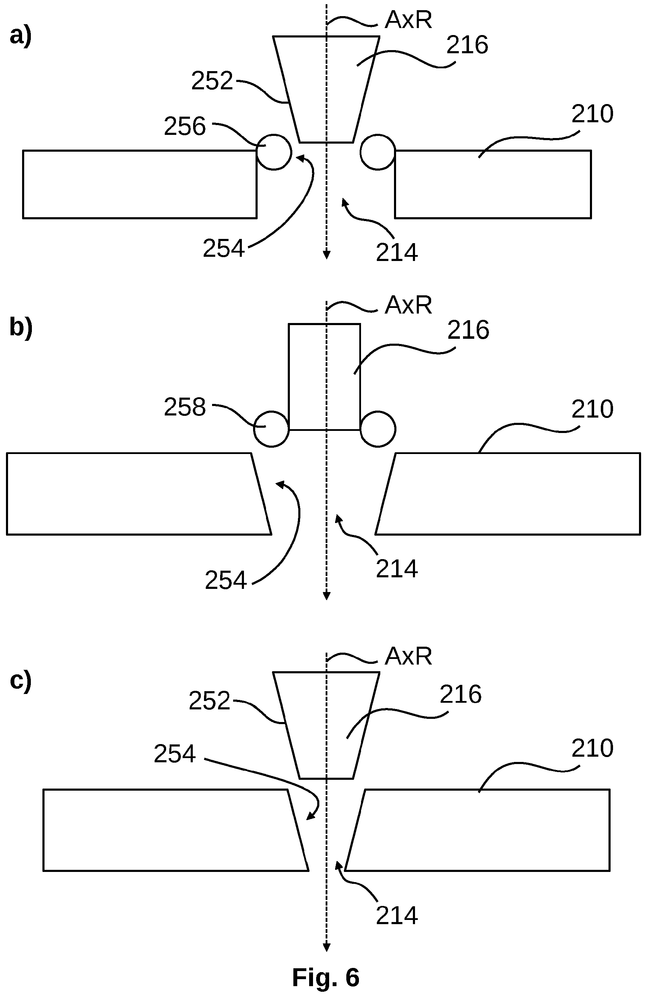

Figs. 6-8 schematically illustrates various examples of engagement components 216, brake rings 210, and their interaction. More particularly, the interaction locations 214 of the brake rings 210 are illustrated.

In the examples of Fig. 6, the engagement component 216 are configured to exert a tangential force at the interaction location to increase the diameter of the brake ring 210, i.e. by expanding brake ring 210 at the interaction location 214.

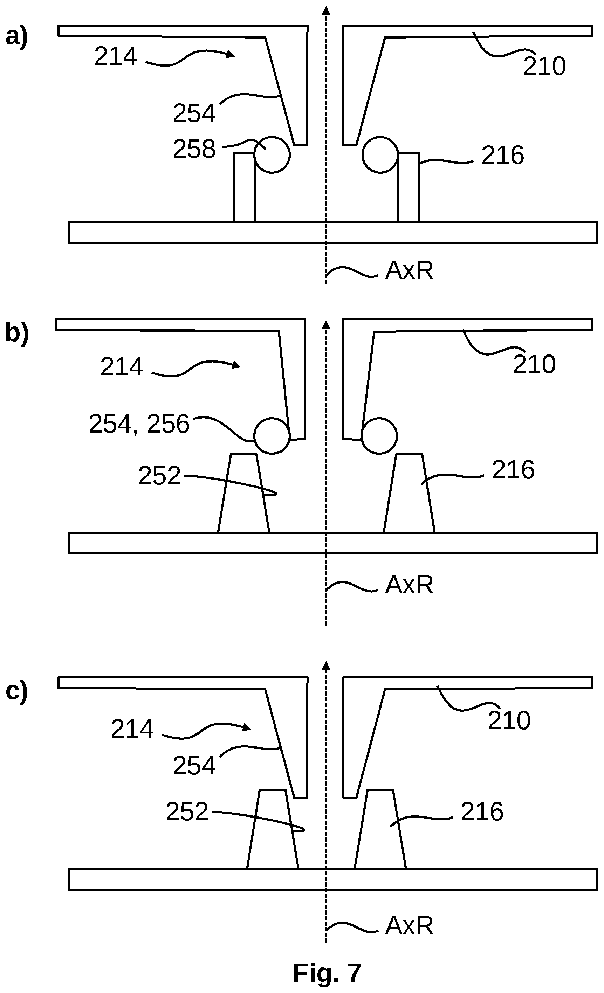

In the examples of Fig. 7, the engagement component 216 are configured to exert a tangential force at the interaction location to decrease the diameter of the brake ring 210, i.e. by contracting brake ring 210 at the interaction location 214.

As illustrated in Figs.6a, 6c, 7b, and 7c, the engagement component 216 may comprise a wedge engagement surface 252 forming an angle relative to the rotation axis AxR. When the engagement component is in the first position the wedge engagement surface 252 contacts the contact surface 254 of the brake ring 210 at the interaction location 214. Although, in the present examples, the engagement component 216 comprises two, substantially equally angled, wedge engagement surfaces 252, it is mentioned that in some examples, only one of the surfaces may be angled, i.e. a wedge engagement surface, while the opposite engagement surface may be straight, e.g. being substantially parallel to the rotation axis.

As illustrated in Figs.6b, 6c, 7a, and 7c, the contact surface 254 of the brake ring 210 may be a wedge contact surface 254 forming an angle relative to the rotation axis AxR. Although, in the present examples, the brake ring 210 comprises two, substantially equally angled, wedge contact surfaces 254, it is mentioned that in some examples, only one of the surfaces may be angled while the opposite contact surface may be straight, e.g. being substantially parallel to the rotation axis.

As illustrated in Figs. 6c and 7c the engagement component 216 may comprise a wedge engagement surface 252 and the brake ring 210 may comprise a corresponding wedge contact surface 254. The wedge engagement surface 252 and the wedge contact surface 254 may form a substantially similar angle relative to the rotation axis AxR, i.e. may be substantially supplementary.

The wedge surfaces 252, 254 may be provided to proportionally couple the movement of the engagement component 216 to the tangential force provided on the brake ring 210.

As illustrated in Figs. 6a and 7b, the brake ring 210 may comprise rolling elements 256 at the interaction location 214. The rolling elements 256 may form the contact surface 254. The rolling elements 256 of the brake ring 210 are arranged to rotate about respective rolling axes perpendicular to the rotation axis AxR. The rolling elements 256 may be adapted to translate along the rotation axis AxR, e.g. caused by the movement of the engagement component 216 along the rotation axis AxR relative to the brake ring 210. Similarly, as illustrated in Figs. 6b and 7a, the engagement component 216 may comprise rolling elements 258 at the interaction location 214. The rolling elements 258 of the engagement component 216 are arranged to rotate about respective rolling axes perpendicular to the rotation axis AxR. The rolling elements 258 of the engagement component 216 may be adapted to translate along the rotation axis AxR, e.g. caused by the movement of the engagement component 216 along the rotation axis AxR relative to the brake ring 210. The rolling elements 256, 258 may be provided to reduce friction between the engagement component 216 and the brake ring 210. In some examples, the rolling elements 256, 258 comprises teeth to engage with toothed surfaces on the interaction location 214 of the brake ring and/or on the engagement component 216, such as to translate the rolling elements 256, 258 back and forth together with the movement of the engagement component 216 relative to the brake ring 210.

Although not specifically illustrated, it is noted that rolling elements 256,258 may be provided in combination with both the brake ring 210 and the engagement component 216 comprising wedge surfaces. Thus, rolling elements 256, 258 may be provided between opposite wedge surfaces of the brake ring 210 and the engagement component 216.

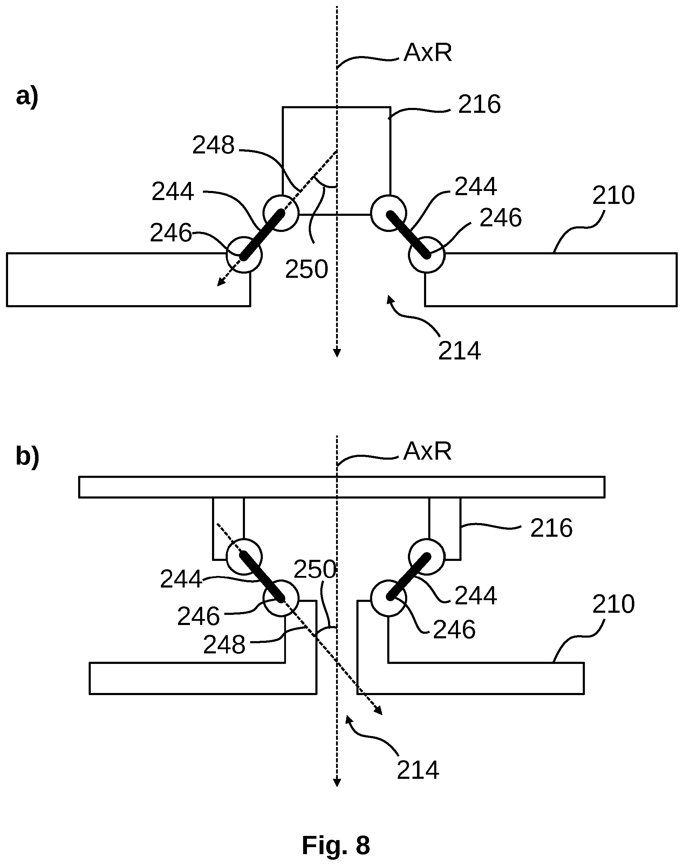

In the examples of Fig. 8, the engagement component 216 and the brake ring 210 are connected with rod elements 244 extending along respective rod axes 248 (for simplicity a rod axis is only denoted for one rod element 244). More particularly, the rod elements 244 connects the engagement component 216 with respective connection points 246 of the brake ring 210 at the interaction location 214. Figs. 8a and 8b, respectively, illustrates two different connection arrangement between the engagement component 216 and the brake ring 210.

An angle 250 is formed between the rotation axis AxR and each of the rod axes 248. The rod elements 244 are hingedly connected to the engagement component 216 and to the brake ring, such as to allow the rod elements 244 to rotate relative to the engagement component 216 and the brake ring 210 about axes perpendicular to the rod axes 248 and rotation axis AxR. When the engagement component 216 is in the first position the rod axis 248 the rotation axis AxR forms a first angle. When the engagement component is in the second position, i.e. when the engagement component 216 has moved along the rotation axis AxR relative to the first position, the rod axis and the rotation axis forms a second angle different from the first angle. If the engagement component 216 has moved further away from the brake ring 210 in the second position, the second angle will be smaller than the first angle, and the brake ring 210 will be contracted, i.e. the diameter of the brake ring 210 will be decreased. If the engagement component 216 has moved closer to the brake ring 210 in the second position, the second angle will be larger than the first angle, and the brake ring 210 will be expanded, i.e. the diameter of the brake ring 210 will be increased.

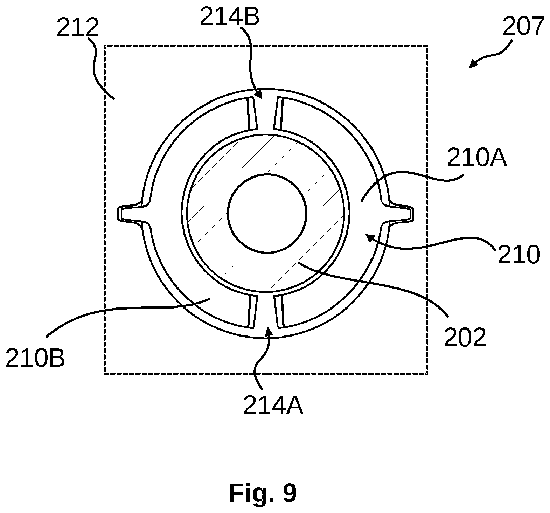

Fig. 9 schematically illustrates a cross sectional view of a brake arrangement 207 as illustrated in Fig. 5, which is shown to illustrate that the brake ring 210 may have a plurality of interaction locations 214A, 214B. Accordingly, the brake ring 210 may be separated in a first brake ring part 210A and a second brake ring part 210B.

Each of the interaction locations may be subject to a tangential force, as described above, to alter the internal diameter of the brake ring 210, such as to brake the rotation of the axle 202. Preferably, the interaction locations 214A, 214B may be evenly distributed around the axle 202, e.g. as illustrated where the two interaction locations 214A, 214B are provided opposite each other, i.e. 180 degrees apart. Thus, in an example where the brake ring 210 has three interaction locations, they may be distributed 120 degrees apart. The illustrated example comprising a plurality of interaction locations 214A, 214B may be advantageous in that interaction between the engagement component 216 (cf. Figs. 3 and 4) and the interaction locations 214A, 214B, may be balanced, thereby reducing or avoiding tiling of the engagement component 216.

In the illustrated example, the brake ring 210 is coupled to the brake casing via the coupling element 212, which prevents rotation of the brake ring 210 relative to the brake casing. However, as mentioned previously, the brake ring 210 may be coupled to the brake casing via interaction of the engagement component.

As mentioned above, resilience of the brake ring 210 may cause the opposite mode when the tangential force at the interaction locations 214A, 214B is released. A resilient element, e.g. a spring, may be provided at the interaction locations 214A, 214B, so as to cause the opposite mode when the tangential force provided by the engagement component is released.

The disclosure has been described with reference to a preferred embodiment. However, the scope of the invention is not limited to the illustrated embodiment, and alterations and modifications can be carried out without deviating from the scope of the invention.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

### LIST OF REFERENCES

- 2: robot
- 4: base
- 6: first link
- 8: first joint assembly
- 10: second link
- 12: second joint assembly
- 14: third link
- 16: third joint assembly
- 18: fourth link
- 20: fourth joint assembly

- 90: joint assembly
- 92: primary link
- 94: secondary link
- 100: joint housing
- 102: first motor
- 104: second motor
- 106: circuitry

- 200: motor assembly
- 202: axle
- 204: wiring
- 206: motor
- 207: brake arrangement
- 208: brake casing
- 210: brake ring
- 212: coupling element
- 214: interaction location
- 216: engagement component
- 218: stator
- 220: rotor magnet
- 222: motor assembly housing
- 230: strain wave gearing system
- 232: wave generator
- 234: flexspline
- 236: circular spline
- 238: wave generator bearing
- 240: electromagnetic element
- 242: spring element
- 244: rod element
- 246: connection point
- 248: rod axis
- 250: angle
- 252: engagement surface
- 254: contact surface
- 256: rolling element
- 258: rolling element

- Ax1: first axis
- Ax2: second axis
- Ax3: third axis
- Ax4: fourth axis
- Ax5: fifth axis
- Ax6: sixth axis
- Ax7: seventh axis

- p1: first axial position
- d1: outer diameter of brake ring
- d2: internal diameter of brake ring

## Claims

1. A joint assembly (8, 12, 16, 20, 90) for a robot (2), comprising:
- an axle (202) extending along a rotation axis and being rotatable around the rotation axis (AxR), the axle being rotated by an electric motor (206), the axle having a first axle diameter (d1) at a first axial position along the rotation axis,
- a brake casing (208), wherein the axle is rotatable around the rotation axis relative to the brake casing,
- a brake ring (210) being coaxial with the axle and positioned at the first axial position, the brake ring having an interaction location (214) at which a tangential force may be exerted on the brake ring to alter an internal diameter (d2) of the brake ring, the brake ring being coupled with the brake casing to prevent rotation of the brake ring relative to the brake casing, wherein the internal diameter of the brake ring in a braking mode is equal to or less than the first axle diameter, and wherein the internal diameter of the brake ring in a non-braking mode is more than the first axle diameter,
- an engagement component (216) configured to move along the rotation axis, between a first position and a second position, wherein the engagement component is further configured to engage with the brake ring at the interaction location, and wherein in the first position the engagement component exerts a first tangential force on the brake ring, and wherein in the second position the engagement component exerts no or a second tangential force on the brake ring, wherein the second tangential force is smaller than the first tangential force.

2. Joint assembly according to claim 1, wherein the first tangential force is exerted on the brake ring at the interaction location in the non-braking mode and no or the second tangential force is exerted on the brake ring at the interaction location in the braking mode.

3. Joint assembly according to claim 1, wherein the first tangential force is exerted on the brake ring at the interaction location in the braking mode and no or the second tangential force is exerted on the brake ring at the interaction location in the non-braking mode.

4. Joint assembly according to any of the preceding claims, wherein the engagement component comprises a wedge engagement surface forming an angle relative to the rotation axis, wherein when the engagement component is in the first position the wedge engagement surface contacts a contact surface of the brake ring at the interaction location.

5. Joint assembly according to claim 4, wherein the brake ring comprises a rolling element at the interaction location forming the contact surface, and wherein the rolling element is arranged to rotate about a rolling axis perpendicular to the rotation axis.

6. Joint assembly according to any one of claims 4-5, wherein when the engagement component is in an intermediate position between the first position and the second position, the wedge engagement surface contacts the contact surface, and wherein in the intermediate position the engagement component exerts an intermediate tangential force on the brake ring, wherein the intermediate tangential force is smaller than the first tangential force, and wherein the intermediate tangential force is larger than the second tangential force.

7. Joint assembly according to claim 6, wherein a first distance of movement of the engagement component along the rotation axis between the first position and the intermediate position is longer than a second distance of movement of the engagement component along the rotation axis between the intermediate position and the second position.

8. Joint assembly according to any of the preceding claims, wherein the engagement component comprises a rod element extending along a rod axis and connecting the engagement component with a connection point of the brake ring at the interaction location, wherein when the engagement component is in the first position the rod axis and the rotation axis forms a first angle, and wherein when the engagement component is in the second position the rod axis and the rotation axis forms a second angle different from the first angle, e.g. larger than the first angle.

9. Joint assembly according to any of the preceding claims comprising an electromagnetic element and a spring element collectively configured to move the engagement component between the first position and the second position.

10. Joint assembly according to claim 9 wherein the electromagnetic element upon activation is configured to move the engagement component to the first position, and wherein the spring element, upon deactivation of the electromagnetic element, is configured to move the engagement component to the second position,
alternatively, wherein the electromagnetic element upon activation is configured to move the engagement component to the second position, and wherein the spring element, upon deactivation of the electromagnetic element, is configured to move the engagement component to the first position.

11. Joint assembly according to any of the preceding claims comprising a motor assembly housing, an output part and a strain wave gearing system, the strain wave gearing system comprising: a wave generator, a flexspline connected to one of the motor assembly housings and the output part, and a circular spline connected to the other of the motor assembly housing and the output part, wherein the wave generator is rotated by rotation of the axle.

12. Joint assembly according to claim 11 wherein the motor assembly housing comprises the brake casing or wherein the motor assembly housing and brake casing are fixedly connected, alternatively, wherein the output part comprises the brake casing or wherein the output part and brake casing are fixedly connected.

13. Joint assembly according to any of claims 11-12 wherein the electric motor comprises a stator and a rotor magnet, the rotor magnet being affixed to the axle, and the stator being affixed to the motor assembly housing.

14. Robot comprising a first joint assembly according to the joint assembly of any one of the preceding claims.

15. Robot according to claim 14 comprising a plurality of joint assemblies including the first joint assembly and a second joint assembly, and wherein each of the plurality of joint assemblies is a joint assembly according to the joint assembly of any one of claims 1-13.

## Patentansprüche

1. Gelenkanordnung (8, 12, 16, 20, 90) für einen Roboter (2), umfassend:
- eine Achse (202), die sich entlang einer Rotationsachse erstreckt und um die Rotationsachse (AxR) drehbar ist, wobei die Achse durch einen Elektromotor (206) rotiert wird, wobei die Achse an einer ersten axialen Position entlang der Rotationsachse einen ersten Achsendurchmesser (d1) aufweist,
- ein Bremsgehäuse (208), wobei die Achse in Bezug auf das Bremsgehäuse um die Rotationsachse drehbar ist,
- einen Bremsring (210), der koaxial mit der Achse ist und an der ersten axialen Position angeordnet ist, wobei der Bremsring eine Interaktionsstelle (214) aufweist, an der eine tangentiale Kraft auf den Bremsring ausgeübt werden kann, um einen Innendurchmesser (d2) des Bremsrings zu verändern, wobei der Bremsring mit dem Bremsgehäuse gekoppelt ist, um Rotation des Bremsrings in Bezug auf das Bremsgehäuse zu verhindern, wobei der Innendurchmesser des Bremsrings in einem Bremsmodus gleich oder weniger als der erste Achsendurchmesser ist, und wobei der Innendurchmesser des Bremsrings in einem Nichtbremsmodus mehr als der erste Achsendurchmesser ist,
- eine Eingriffskomponente (216), die so ausgebildet ist, dass sie sich entlang der Rotationsachse zwischen einer ersten Position und einer zweiten Position bewegt, wobei die Eingriffskomponente weiter so ausgebildet ist, dass sie mit dem Bremsring an der Interaktionsstelle in Eingriff kommt, und wobei die Eingriffskomponente in der ersten Position eine erste tangentiale Kraft auf den Bremsring ausübt, und wobei die Eingriffskomponente in der zweiten Position keine oder eine zweite tangentiale Kraft auf den Bremsring ausübt, wobei die zweite tangentiale Kraft kleiner als die erste tangentiale Kraft ist.

2. Gelenkanordnung nach Anspruch 1, wobei die erste tangentiale Kraft im Nichtbremsmodus an der Interaktionsstelle auf den Bremsring ausgeübt wird und wobei im Bremsmodus an der Interaktionsstelle keine oder die zweite tangentiale Kraft auf den Bremsring ausgeübt wird.

3. Gelenkanordnung nach Anspruch 1, wobei die erste tangentiale Kraft im Bremsmodus an der Interaktionsstelle auf den Bremsring ausgeübt wird und wobei im Nichtbremsmodus an der Interaktionsstelle keine oder die zweite tangentiale Kraft auf den Bremsring ausgeübt wird.

4. Gelenkanordnung nach einem der vorstehenden Ansprüche, wobei die Eingriffskomponente eine keilförmige Eingriffsfläche umfasst, die einen Winkel in Bezug auf die Rotationsachse bildet, wobei, wenn die Eingriffskomponente in der ersten Position ist, die keilförmige Eingriffsfläche eine Kontaktfläche des Bremsrings an der Interaktionsstelle kontaktiert.

5. Gelenkanordnung nach Anspruch 4, wobei der Bremsring an der Interaktionsstelle einen Wälzkörper umfasst, der die Kontaktfläche bildet, und wobei der Wälzkörper so angeordnet ist, dass er um eine Wälzachse, die senkrecht zur Rotationsachse ist, rotiert.

6. Gelenkanordnung nach einem der Ansprüche 4-5, wobei, wenn sich die Eingriffskomponente in einer Zwischenposition zwischen der ersten Position und der zweiten Position befindet, die keilförmige Eingriffsfläche die Kontaktfläche kontaktiert, und wobei die Eingriffskomponente in der Zwischenposition eine mittlere tangentiale Kraft auf den Bremsring ausübt, wobei die mittlere tangentiale Kraft kleiner als die erste tangentiale Kraft ist, und wobei die mittlere tangentiale Kraft größer als die zweite tangentiale Kraft ist.

7. Gelenkanordnung nach Anspruch 6, wobei eine erste Bewegungsstrecke der Eingriffskomponente entlang der Rotationsachse zwischen der ersten Position und der Zwischenposition länger als eine zweite Bewegungsstrecke der Eingriffskomponente entlang der Rotationsachse zwischen der Zwischenposition und der zweiten Position ist.

8. Gelenkanordnung nach einem der vorstehenden Ansprüche, wobei die Eingriffskomponente ein Stangenelement umfasst, das sich entlang einer Stangenachse erstreckt und mit die Eingriffskomponente mit einem Verbindungspunkt des Bremsrings an der Interaktionsstelle verbindet, wobei, wenn sich die Eingriffskomponente in der ersten Position befindet, die Stangenachse und die Rotationsachse einen ersten Winkel bilden, und wobei, wenn sich die Eingriffskomponente in der zweiten Position befindet, die Stangenachse und die Rotationsachse einen zweiten Winkel bilden, der sich von dem ersten Winkel unterscheidet, z. B. größer als der erste Winkel ist.

9. Gelenkanordnung nach einem der vorstehenden Ansprüche, umfassend ein elektromagnetisches Element und ein Federelement, die gemeinsam ausgebildet so sind, dass sie die Eingriffskomponente zwischen der ersten Position und der zweiten Position bewegen.

10. Gelenkanordnung nach Anspruch 9, wobei das elektromagnetische Element bei Aktivierung so ausgebildet ist, dass es die Eingriffskomponente in die erste Position bewegt, und wobei das Federelement, bei Deaktivierung des elektromagnetischen Elements, so ausgebildet ist, dass es die Eingriffskomponente in die zweite Position bewegt,
alternativ, wobei das elektromagnetische Element bei Aktivierung so ausgebildet ist, dass sie die Eingriffskomponente in die zweite Position bewegt, und wobei das Federelement bei Deaktivierung des elektromagnetischen Elements so ausgebildet ist, dass es die Eingriffskomponente in die erste Position bewegt.

11. Gelenkanordnung nach einem der vorstehenden Ansprüche, umfassend ein Motoranordnungsgehäuse, ein Abtriebsteil und ein Spannungswellengetriebesystem, wobei das Spannungswellengetriebesystem Folgendes umfasst: einen Wellengenerator, eine Flexspline, die mit einem des Motorbaugruppengehäuses und des Abtriebsteils verbunden ist, und eine Circular Spline, die mit dem anderen des Motoranordnungsgehäuses und des Abtriebsteils verbunden ist, wobei der Wellengenerator durch Rotation der Achse rotiert wird.

12. Gelenkanordnung nach Anspruch 11, wobei das Motoranordnungsgehäuse das Bremsgehäuse umfasst, oder wobei das Motoranordnungsgehäuse und das Bremsgehäuse fest verbunden sind, alternativ, wobei das Abtriebsteil das Bremsgehäuse umfasst, oder wobei das Abtriebsteil und das Bremsgehäuse fest verbunden sind.

13. Gelenkanordnung nach einem der Ansprüche 11-12, wobei der Elektromotor einen Stator und einen Rotormagneten umfasst, wobei der Rotormagnet an der Achse befestigt ist, und wobei der Stator an dem Motoranordnungsgehäuse befestigt ist.

14. Roboter, umfassend eine erste Gelenkanordnung gemäß der Gelenkanordnung nach einem der vorhergehenden Ansprüche.

15. Roboter nach Anspruch 14, umfassend eine Vielzahl von Gelenkanordnungen, die die erste Gelenkanordnung und eine zweite Gelenkanordnung einschließen, und wobei jede der Vielzahl von Gelenkanordnungen eine Gelenkanordnung gemäß der Gelenkanordnung nach einem der Ansprüche 1-13 ist.

## Revendications

1. Ensemble (8, 12, 16, 20, 90) formant articulation pour un robot (2), comprenant :
- un arbre (202), s'étendant le long d'un axe de rotation et étant rotatif autour de l'axe de rotation (AxR), l'arbre étant entraîné en rotation par un moteur électrique (206), l'arbre présentant un premier diamètre d'arbre (d1) à une première position axiale le long de l'axe de rotation,
- un boîtier de frein (208), dans lequel l'arbre est rotatif autour de l'axe de rotation par rapport au boîtier de frein,
- un élément annulaire de frein (210) étant coaxial à l'arbre et étant positionné au niveau de la première position axiale, l'élément annulaire de frein ayant un emplacement d'interaction (214) au niveau duquel une force tangentielle est apte à être exercée sur l'élément annulaire de frein de manière à modifier un diamètre intérieur (d2) de l'élément annulaire de frein, l'élément annulaire de frein étant relié au boîtier de frein de manière à empêcher une rotation de l'élément annulaire de frein par rapport au boîtier de frein,
dans lequel le diamètre intérieur de l'élément annulaire de frein en mode de freinage est égal au premier diamètre d'arbre, ou inférieur à ce diamètre, et dans lequel le diamètre intérieur de l'élément annulaire de frein en mode de non-freinage est supérieur au premier diamètre d'arbre,
- un organe d'engagement (216), configuré pour se déplacer le long de l'axe de rotation, entre une première position et une deuxième position, dans lequel l'organe d'engagement est en outre configuré pour venir en engagement avec l'élément annulaire de frein à l'emplacement d'interaction, et
dans lequel, dans la première position, l'organe d'engagement exerce une première force tangentielle sur l'élément annulaire de frein, et dans lequel, dans la deuxième position, l'organe d'engagement n'exerce aucune force tangentielle, ou exerce une deuxième force tangentielle, sur l'élément annulaire de frein, dans lequel la deuxième force tangentielle est plus petite que la première force tangentielle.

2. Ensemble formant articulation selon la revendication 1, dans lequel la première force tangentielle est exercée sur l'élément annulaire de frein à l'emplacement d'interaction en mode de non-freinage et aucune force tangentielle n'est exercée, ou la deuxième force tangentielle est exercée, sur l'élément annulaire de frein à l'emplacement d'interaction en mode de freinage.

3. Ensemble formant articulation selon la revendication 1, dans lequel la première force tangentielle est exercée sur l'élément annulaire de frein à l'emplacement d'interaction en mode de freinage et aucune force tangentielle n'est exercée, ou la deuxième force tangentielle est exercée, sur l'élément annulaire de frein à l'emplacement d'interaction en mode de non-freinage.

4. Ensemble formant articulation selon l'une quelconque des revendications précédentes, dans lequel l'organe d'engagement comprend une surface d'engagement en coin formant un angle par rapport à l'axe de rotation, dans lequel, lorsque l'organe d'engagement est dans la première position, la surface d'engagement en coin est en contact avec une surface de contact de l'élément annulaire de frein à l'emplacement d'interaction.

5. Ensemble formant articulation selon la revendication 4, dans lequel l'élément annulaire de frein comprend un élément roulant à l'emplacement d'interaction formant la surface de contact, et dans lequel l'élément roulant est agencé de manière à tourner autour d'un axe de roulement perpendiculaire à l'axe de rotation.

6. Ensemble formant articulation selon l'une quelconque des revendications 4 à 5, dans lequel, lorsque l'organe d'engagement est dans une position intermédiaire entre la première position et la deuxième position, la surface d'engagement en coin est en contact avec la surface de contact, et
dans lequel, dans la position intermédiaire, l'organe d'engagement exerce une force tangentielle intermédiaire sur l'élément annulaire de frein, dans lequel la force tangentielle intermédiaire est plus petite que la première force tangentielle, et dans lequel la force tangentielle intermédiaire est plus grande que la deuxième force tangentielle.

7. Ensemble formant articulation selon la revendication 6, dans lequel une première distance de déplacement de l'organe d'engagement le long de l'axe de rotation entre la première position et la position intermédiaire est plus longue qu'une deuxième distance de déplacement de l'organe d'engagement le long de l'axe de rotation entre la position intermédiaire et la deuxième position.

8. Ensemble formant articulation selon l'une quelconque des revendications précédentes, dans lequel l'organe d'engagement comprend un élément en forme de tige s'étendant le long d'un axe de tige et reliant l'organe d'engagement à un point de liaison de l'élément annulaire de frein à l'emplacement d'interaction,
dans lequel, lorsque l'organe d'engagement est dans la première position, l'axe de tige et l'axe de rotation forment un premier angle, et dans lequel lorsque l'organe d'engagement est dans la deuxième position l'axe de tige et l'axe de rotation forment un deuxième angle différent du premier angle, p. ex. plus grand que le premier angle.

9. Ensemble formant articulation selon l'une quelconque des revendications précédentes, comprenant un élément électromagnétique et un élément formant ressort, collectivement configurés pour déplacer l'organe d'engagement entre la première position et la deuxième position.

10. Ensemble formant articulation selon la revendication 9, dans lequel l'élément électromagnétique, lors de l'activation, est configuré pour déplacer l'organe d'engagement vers la première position, et dans lequel l'élément formant ressort, lors de la désactivation de l'élément électromagnétique, est configuré pour déplacer l'organe d'engagement vers la deuxième position,
alternativement, dans lequel l'élément électromagnétique, lors de l'activation, est configuré pour déplacer l'organe d'engagement vers la deuxième position, et dans lequel l'élément formant ressort, lors de la désactivation de l'élément électromagnétique, est configuré pour déplacer l'organe d'engagement vers la première position.

11. Ensemble formant articulation selon l'une quelconque des revendications précédentes, comprenant un boîtier d'ensemble moteur, une pièce de sortie et un système d'engrenage à onde de déformation, le système d'engrenage à onde de déformation comprenant : un générateur d'ondes, une flexspline reliée à un parmi le boîtier d'ensemble moteur et la pièce de sortie, et une cannelure circulaire reliée à l'autre parmi le boîtier d'ensemble moteur et la pièce de sortie, dans lequel le générateur d'ondes est tourné par rotation de l'arbre.

12. Ensemble formant articulation selon la revendication 11, dans lequel le boîtier d'ensemble moteur comprend le boîtier de frein, ou dans lequel le boîtier d'ensemble moteur et le boîtier de frein sont reliés de manière fixe, alternativement, dans lequel la pièce de sortie comprend le boîtier de frein ou dans lequel la pièce de sortie et le boîtier de frein sont reliés de manière fixe.

13. Ensemble formant articulation selon l'une quelconque des revendications 11 à 12, dans lequel le moteur électrique comprend un stator et un aimant de rotor, l'aimant de rotor étant fixé sur l'arbre, et le stator étant fixé sur le boîtier d'ensemble moteur.

14. Robot comprenant un premier ensemble formant articulation selon l'ensemble formant articulation de l'une quelconque des revendications précédentes.

15. Robot selon la revendication 14, comprenant une pluralité d'ensembles d'articulation incluant le premier ensemble formant articulation et un deuxième ensemble formant articulation, et dans lequel chaque ensemble formant articulation de la pluralité d'ensembles formant articulation est un ensemble formant articulation selon l'ensemble formant articulation de l'une quelconque des revendications 1 à 13.
